(19) Europäisches Patentamt
European Patent Office
Office européen des brevets

(11) **EP 1 251 643 B1**

(12) **FASCICULE DE BREVET EUROPEEN**

(45) Date de publication et mention
de la délivrance du brevet:
**25.07.2007 Bulletin 2007/30**

(51) Int Cl.:
***H04B 1/713*** *(2006.01)*

(21) Numéro de dépôt: **02290910.5**

(22) Date de dépôt: **11.04.2002**

(54) **Procédé d'allocation de ressources dans un réseau hertzien de communication à saut de frequence**

Verfahren zur Ressourcenzuteilung in einem drahtlosen Netz mit Frequenzsprung

Method to allocate resources in a radio communication network with frequency hopping

(84) Etats contractants désignés:
**DE ES GB IT NL SE**

(30) Priorité: **18.04.2001 FR 0105233**

(43) Date de publication de la demande:
**23.10.2002 Bulletin 2002/43**

(73) Titulaire: **SAGEM Défense Sécurité**
**75015 Paris (FR)**

(72) Inventeur: **Perrot, Thierry**
**95880 Enghien-les-Bains (FR)**

(74) Mandataire: **Loisel, Bertrand**
**Cabinet Plasseraud**
**52 rue de la Victoire**
**75440 Paris Cedex 09 (FR)**

(56) Documents cités:
**US-A- 5 737 358      US-A- 5 875 179**

• **DOMINIQUE F ET AL: "Robust frequency hop synchronisation algorithm" ELECTRONICS LETTERS, IEE STEVENAGE, GB, vol. 32, no. 16, 1 août 1996 (1996-08-01), pages 1450-1451, XP006005464 ISSN: 0013-5194**

**Description**

La présente invention concerne les méthodes d'allocation de ressources fréquentielles dans les réseaux hertziens de communication utilisant des techniques de saut de fréquence.

Dans un réseau maillé de stations hertziennes, la diversité en fréquence est utile pour faire face à des problèmes tels que le bruit, les interférences, les évanouissements de canal ou la confidentialité. Cette diversité est réalisée en faisant périodiquement sauter chaque station sur différentes fréquences porteuses.

Le document US5737358 décrit un exemple d'allocation de ressources fréquentielles dans un réseau hertzien.

Compte tenu de la limitation du spectre disponible pour le réseau, les fréquences de communication sont réutilisées dans différentes mailles. Les sauts de fréquence doivent alors être synchronisés pour limiter les interférences. Si la synchronisation est parfaite, toutes les mailles changent de canal fréquentiel au même instant. Si elle est imparfaite, des périodes transitoires de recouvrement de canal peuvent se produire.

Il est usuel de synchroniser les stations à saut de fréquence à l'aide de signaux de référence temporelle reçus depuis une constellation de satellites, notamment des signaux GPS (« Global Positioning System »).

Toutefois, un certains nombre d'applications requièrent de disposer d'une méthode de synchronisation de secours, pour les cas où les signaux GPS ne seraient plus disponibles. Pour être autonome, un tel mode de secours est de préférence interne au réseau hertzien. Il conduit généralement à des périodes de recouvrement dont la durée dépend du degré de synchronisation obtenu.

Plus généralement, des applications des réseaux hertziens maillés peuvent nécessiter que le degré de synchronisation puisse varier sans remettre en cause la possibilité de sauter en fréquence.

Un but de la présente invention est de proposer un mécanisme d'allocation des fréquences qui réponde à ce besoin tout en limitant les interférences entre les stations.

L'invention propose ainsi un procédé d'allocation de ressources à des mailles d'un réseau hertzien de communication, chaque maille étant prévue pour faire communiquer entre elles deux stations radio avec un saut périodique de fréquence de communication, dans lequel on prévoit au moins un mode de communication dans lequel on répartit les mailles en N groupes, on partitionne une partie au moins d'un spectre disponible en M sous-ensembles disjoints d'au moins N fréquences, N et M étant des nombres supérieurs à 1, on définit pour chaque sous-ensemble plusieurs vecteurs composés chacun de N fréquences différentes dudit sous-ensemble respectivement associées aux N groupes, on détermine une séquence de vecteurs telle que chaque M-uplet de vecteurs consécutifs consiste en des vecteurs respectivement issus des M sous-ensembles, on attribue à chaque groupe de mailles une séquence de saut constituée des fréquences associées audit groupe dans ladite séquence de vecteurs, et on fait communiquer les stations radio suivant chaque maille selon les fréquences successives de la séquence attribuée audit groupe.

La distribution des mailles dans les N groupes est effectuée en fonction des positions géographiques des stations et de l'orientation des mailles, de telle sorte que l'allocation simultanée d'une fréquence à deux mailles d'un même groupe donne lieu à des conditions d'interférence acceptables. Le procédé d'allocation proposé admet une certaine désynchronisation entre les instants des sauts de fréquence par les différentes stations, avec un niveau d'interférence contrôlé. Il garantit notamment que la même fréquence ne sera pas allouée à deux mailles appartenant à deux groupes distincts.

Le procédé peut s'adapter au degré de désynchronisation observé dans le réseau. Pour cela, on adapte le nombre M en fonction des dispersions temporelles entre les instants des sauts de fréquence par les différentes stations radio, relativement à la période entre deux sauts consécutifs.

Un réseau hertzien maillé mettant en oeuvre ce procédé pourra généralement avoir un autre mode de communication utilisant des signaux externes, par exemple des signaux GPS pour synchroniser les instants des sauts de fréquence par les stations radio. Le mode de communication utilisant les N groupes et les séquences de sauts précitées peut alors être adopté en cas de perte de réception des signaux externes.

D'autres particularités et avantages de la présente invention apparaîtront dans la description ci-après d'exemples de réalisation non limitatifs, en référence aux dessins annexés, dans lesquels :

- la figure 1 est un schéma d'un réseau hertzien maillé pouvant mettre en oeuvre l'invention ;
- la figure 2 est un schéma synoptique d'une station radio d'un tel réseau ;
- la figure 3 est un chronogramme illustrant un exemple d'allocation de fréquence par le procédé selon l'invention.

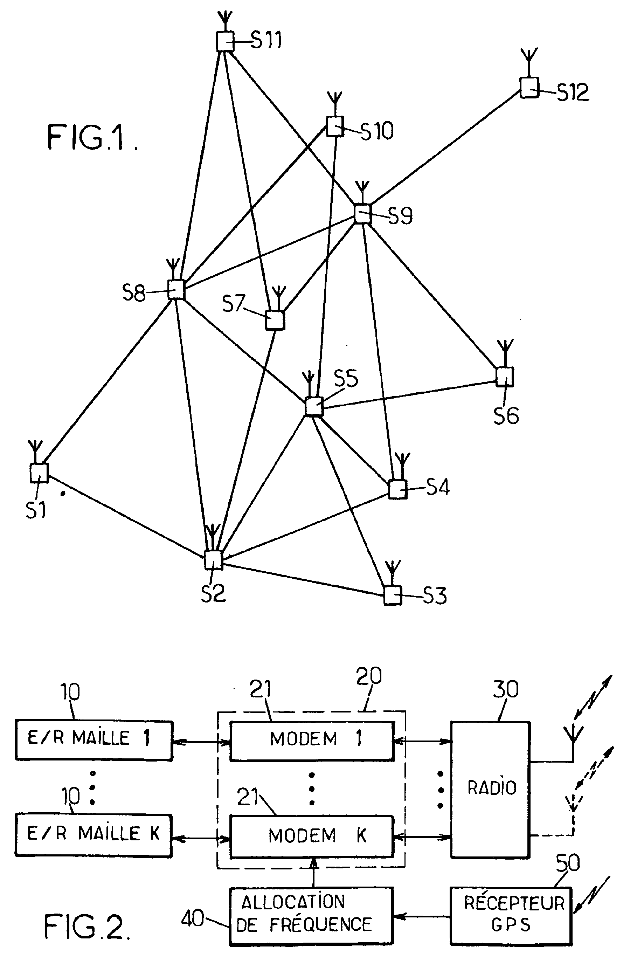

La figure 1 illustre un exemple de topologie d'un réseau hertzien maillé comportant douze stations radio S1-S12 et vingt-et-une mailles bidirectionnelles entre ces stations. La distance entre les stations est typiquement de l'ordre de plusieurs kilomètres à plusieurs dizaines de kilomètres.

On considère dans cet exemple des mailles bidirectionnelles afin de clarifier l'exposé. Ceci peut correspondre à un cas où les stations communiquent selon un mode de duplex à partage temporel (TDD). Si le mode de duplex est à partage fréquentiel (FDD), deux fréquences différentes sont utilisées dans les deux sens sur une liaison entre deux stations, de sorte qu'on doit considérer des mailles unidirectionnelles pour l'allocation de fréquences, c'est-à-dire deux mailles pour un couple de stations en liaison duplex.

Certaines mailles, pour des raisons de proximité ou d'orientation, ne peuvent pas utiliser le même canal fréquentiel simultanément. Pour tenir compte de cette contrainte, les mailles sont classées et distribuées en N groupes en fonction de leurs relations mutuelles de position et d'orientation. Le choix du nombre N dépend de l'étendue du spectre disponible et de la densité de mailles. La densité de mailles définit une limite inférieure de N. L'étendue du spectre définit une limite supérieure de N.

A titre d'exemple, dans le réseau hertzien de la figure 1, on peut définir N = 3 groupes, le groupe 1 comprenant les mailles S1/S2, S2/S5, S4/S9, S5/S8, S8/S10 et S9/S11, le groupe 2 comprenant les mailles S1/S8, S2/S3, S2/S7, S4/S5, S5/S10, S6/S9, S7/S11 et S8/S9, et le groupe 3 comprenant les mailles S2/S4, S2/S8, S3/S5, S5/S6, S7/S9, S8/S11 et S9/S12.

La figure 2 montre schématiquement l'une des stations radio, communiquant selon un nombre K de mailles. Cette station comporte K unités d'émission/réception 10 qui délivrent et reçoivent les signaux en bande de base respectivement échangés suivant les K mailles. L'étage de modulation/démodulation 20 comporte K modems 21 respectivement associés aux unités d'émission/réception 10. Ces modems 21 sont reliés à l'étage radio 30 qui multiplexe et démultiplexe les signaux radio relatifs aux différentes mailles et assure les traitements classiques de mise en forme et d'amplification pour la transmission sur l'interface radio, laquelle peut comporter une ou plusieurs antennes.

Une unité d'allocation de fréquence 40 fournit à chacun des modems 21 une séquence de fréquences selon laquelle il doit effectuer les sauts périodiques requis par le mécanisme de diversité en fréquence. La cadence de saut $1/T$ est par exemple de 2 à 5 kHz.

Dans un mode de synchronisation normale du réseau, l'unité 40 effectue la synchronisation des séquences de saut en les positionnant dans le temps par rapport à une référence obtenue à partir de signaux GPS captés par un récepteur 50 dont la station est équipée. Ce recours à des signaux GPS assure une synchronisation fine entre les différentes stations, qui permet une large utilisation du spectre de fréquence disponible.

Le réseau peut également être synchronisé suivant un mode de secours adopté en cas de perte de réception des signaux GPS par une ou plusieurs des stations radio. La synchronisation étant moins fine, il y a de la dispersion entre les instants de saut des différentes stations, ce qui impose davantage de contraintes dans l'utilisation des fréquences.

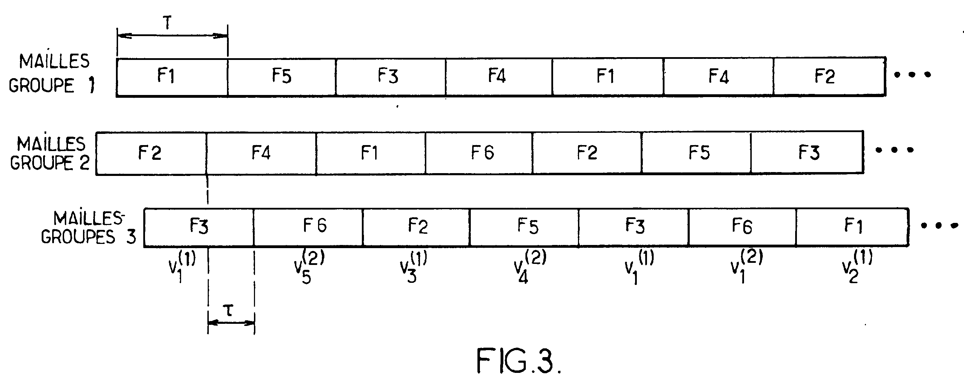

T désignant la durée spécifiée entre deux sauts de fréquence (figure 3), $\delta T$ la dispersion temporelle des instants de saut acceptable par le réseau avec $\delta T < T$, et $\tau$ la dispersion temporelle réelle due à l'état de la synchronisation, on appelle « degré de synchronisation », l'entier m tel que $\delta T + (m-1)T \leq |\tau| < \delta T + mT$, c'est-à-dire $m = E(\max(|\tau| - \delta T)/T) + 1$.

On partage le spectre de fréquence disponible en $M = m+1$ sous-ensembles disjoints $E_1, E_2, ..., E_M$, composés chacun de P fréquences avec $P \geq N$. Ce nombre M dépend essentiellement du rapport $\tau/T$.

Dans chaque sous-ensemble $E_q$ ($1 \leq q \leq M$), on définit des vecteurs de dimension N à partir de tous les arrangements de N éléments parmi les P éléments de $E_q$. Chaque composante d'un tel vecteur est une fréquence du sous-ensemble $E_q$. La n-ième composante d'un vecteur ($1 \leq n \leq N$) est associée au n-ième groupe de mailles, de sorte que la fréquence correspondante pourra être allouée aux mailles de ce groupe.

Les colonnes des tableaux I et II montrent un exemple de construction de ces vecteurs $v_p^{(q)}$ ($1 \leq p \leq N$, $1 \leq q \leq M$) dans un cas où P = N = 3, M = 2 et la portion du spectre allouable se compose de six fréquences F1-F6 réparties en M = 2 sous-ensembles $E_1 = \{F1, F2, F3\}$ et $E_2 = \{F4, F5, F6\}$.

TABLEAU I

|  | $v_1^{(1)}$ | $v_2^{(1)}$ | $v_3^{(1)}$ | $v_4^{(1)}$ | $v_5^{(1)}$ | $v_6^{(1)}$ |
|---|---|---|---|---|---|---|
| Mailles du groupe 1 : | F1 | F2 | F3 | F1 | F2 | F3 |
| Mailles du groupe 2 : | F2 | F3 | F1 | F3 | F1 | F2 |
| Mailles du groupe 3 : | F3 | F1 | F2 | F2 | F3 | F1 |

TABLEAU II

| | $v_1^{(2)}$ | $v_2^{(2)}$ | $v_3^{(2)}$ | $v_4^{(2)}$ | $v_5^{(2)}$ | $v_6^{(2)}$ |
|---|---|---|---|---|---|---|
| Mailles du groupe 1 : | F4 | F5 | F6 | F4 | F5 | F6 |
| Mailles du groupe 2 : | F5 | F6 | F4 | F6 | F4 | F5 |
| Mailles du groupe 3 : | F6 | F4 | F5 | F5 | F6 | F4 |

Pour déterminer les séquences de saut à utiliser dans les mailles, on utilise une séquence pseudo-aléatoire d'entiers p[1], p[2], p[3], ... compris entre 1 et P!/(P-N)!, et on en déduit une séquence de vecteurs $v_{p[1]}^{(q[1])}$, $v_{p[2]}^{(q[2])}$, $v_{p[3]}^{(q[3])}$, ... avec q[i] = 1 + i *mod* M, où i *mod* M désigne le reste de la division euclidienne de i par M. Dans cette séquence $v_{p[i]}^{(q[i])}$ (i = 1, 2, 3, ...), chaque M-uplet de vecteurs consécutifs consiste en des vecteurs respectivement issus des M sous-ensembles $E_1$, $E_2$, ..., $E_M$.

L'unité d'allocation 40 de chaque station mémorise les vecteurs $v_p^{(q)}$ et dispose d'un algorithme convenu entre les différentes stations pour calculer la séquence pseudo-aléatoire p[1], p[2], p[3], ... Elle peut ainsi obtenir la séquence de vecteurs $v_{p[1]}^{(q[1])}$, $v_{p[2]}^{(q[2])}$, $v_{p[3]}^{(q[3])}$, ... et allouer à chaque modem 21 opérant sur une maille du n-ième groupe la séquence de saut constituée par les n-ièmes composantes respectives des vecteurs de la séquence. Cette séquence de saut est allouée à toutes les mailles du même groupe pour faire communiquer entre elles les stations concernées.

Dans l'exemple des tableaux I et II, la figure 3 montre les fréquences sur lesquelles ont lieu les communications sur les mailles des N = 3 groupes, dans un cas où la séquence p[i] est 1, 5, 3, 4, 1, 1, 2, ... On voit qu'aucune fréquence n'est utilisée simultanément sur des mailles de groupes différents. De telles collisions ne peuvent se produire que si la dispersion réelle τ dépasse la durée T entre deux sauts (en négligeant la tolérance δT). Si cela se produit, il faut augmenter le nombre M.

**Revendications**

1.   Procédé d'allocation de ressources à des mailles d'un réseau hertzien de communication, chaque maille étant prévue pour faire communiquer entre elles deux stations radio avec un saut périodique de fréquence de communication, dans lequel on prévoit au moins un mode de communication dans lequel on répartit les mailles en N groupes, on partitionne une partie au moins d'un spectre disponible en M sous-ensembles disjoints d'au moins N fréquences, N et M étant des nombres supérieurs à 1, on définit pour chaque sous-ensemble plusieurs vecteurs composés chacun de N fréquences différentes dudit sous-ensemble respectivement associées aux N groupes, on détermine une séquence de vecteurs telle que chaque M-uplet de vecteurs consécutifs consiste en des vecteurs respectivement issus des M sous-ensembles, on attribue à chaque groupe de mailles une séquence de saut constituée des fréquences associées audit groupe dans ladite séquence de vecteurs, et on fait communiquer les stations radio suivant chaque maille selon les fréquences successives de la séquence attribuée audit groupe.

2.   Procédé selon la revendication 1, dans lequel on prévoit un autre mode de communication dans lequel des signaux externes sont utilisés pour synchroniser les instants des sauts de fréquence par les stations radio, le mode utilisant lesdites séquences étant adopté en cas de perte de réception des signaux externes.

3.   Procédé selon la revendication 1 ou 2, dans lequel le nombre M est sélectionné en fonction d'une dispersion temporelle entre les instants des sauts de fréquence par les différentes stations radio, relativement à la période entre deux sauts consécutifs.

# EP 1 251 643 B1

**Claims**

1. Method for allocating resources to links of a radio communication network, each link being provided to effect communication between two radio stations with a periodic communication frequency hop, wherein there is provided at least one communication mode in which the links are arranged into N groups, at least one part of an available spectrum is separated into M non-overlapping sub-assemblies of at least N frequencies, N and M being numbers greater than 1, for each sub-assembly several vectors are defined each composed of N different frequencies of said sub-assembly which are respectively associated with the N groups, a sequence of vectors is determined such that each M uplet of consecutive vectors consists of vectors respectively outputted from the M sub-assemblies, a hopping sequence is attributed to each group of links and is formed of frequencies associated with said group in said sequence of vectors, and communication is effected between the radio stations following each link in accordance with the successive frequencies of the sequence attributed to said group.

2. Method as claimed in Claim 1, wherein there is provided another communication mode in which external signals are used to synchronise the points in time of the frequency hops by the radio stations, the mode using said sequences being adopted in case of loss of reception of the external signals.

3. Method as claimed in Claim 1 or 2, wherein the number M is chosen based on a temporal dispersion between the points in time of the frequency hops by the different radio stations, relative to the time interval between two consecutive hops.

**Patentansprüche**

1. Verfahren zur Zuteilung von Ressourcen an Maschen eines drahtlosen Kommunikationsnetzes, wobei jede Masche dazu vorgesehen ist, mit einem periodischen Sprung der Kommunikationsfrequenz zwei Funkstellen miteinander zu verbinden, bei dem wenigstens ein Kommunikationsmodus vorgesehen ist, bei dem die Maschen in N Gruppen aufgeteilt werden, wenigstens ein Teil eines verfügbaren Spektrums in M Untergruppen partitioniert wird, die um wenigstens N Frequenzen getrennt sind, wobei N und M Zahlen größer 1 sind, für jede Untergruppe mehrere Vektoren festgelegt werden, die jeweils aus N verschiedenen Frequenzen der Untergruppe gebildet sind, welche jeweils N Gruppen zugeordnet sind, eine Vektorensequenz solchermaßen bestimmt wird, dass jedes M-Tupel aufeinanderfolgender Vektoren aus Vektoren besteht, die jeweils aus M Untergruppen hervorgegangen sind, jeder Maschengruppe eine Sprungsequenz zugeteilt wird, die aus den Frequenzen gebildet ist, welche der Gruppe in dieser Vektorensequenz zugeordnet sind, und die Funkstellen gemäß jeder Masche entsprechend den aufeinanderfolgenden Frequenzen der der Gruppe zugeteilten Sequenz miteinander verbunden werden.

2. Verfahren nach Anspruch 1,
bei dem ein anderer Kommunikationsmodus vorgesehen ist, bei dem zum Synchronisieren der Zeitpunkte der Frequenzsprünge durch die Funkstellen externe Signale verwendet werden, wobei der diese Sequenzen verwendende Modus beim Verlust des Empfangs der externen Signale angewandt wird.

3. Verfahren nach Anspruch 1 oder 2,
bei dem die Zahl M in Abhängigkeit von einer Impulsverbreiterung zwischen den Zeitpunkten der Frequenzsprünge durch die einzelnen Funkstellen bezogen auf den zwischen zwei aufeinanderfolgenden Sprüngen liegenden Zeitraum gewählt ist.

FIG.1.

FIG.2.

EP 1 251 643 B1

MAILLES
GROUPE 1 | F1 | F5 | F3 | F4 | F1 | F4 | F2 | $\cdots$

$T$

MAILLES
GROUPE 2 | F2 | F4 | F1 | F6 | F2 | F5 | F3 | $\cdots$

MAILLES
GROUPES 3 | F3 | F6 | F2 | F5 | F3 | F6 | F1 | $\cdots$

$v_1^{(1)}$    $v_5^{(2)}$    $v_3^{(1)}$    $v_4^{(2)}$    $v_1^{(1)}$    $v_1^{(2)}$    $v_2^{(1)}$

$\tau$

FIG.3.

**EP 1 251 643 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5737358 A